(19) Europäisches Patentamt

European Patent Office

Office européen des brevets

(11) **EP 1 416 136 B1**

(12) **FASCICULE DE BREVET EUROPEEN**

(45) Date de publication et mention
de la délivrance du brevet:
**01.06.2005 Bulletin 2005/22**

(51) Int Cl.⁷: **F02C 9/26**, F02C 9/38,
F02C 7/232, G05D 16/10

(21) Numéro de dépôt: **03292699.0**

(22) Date de dépôt: **29.10.2003**

(54) **Dispositif de dosage de carburant à soupape de régulation compensée dans une turbomachine**

Kraftstoffdosiervorrichtung mit kompensiertem Steuerungsventil in einer Turbomachine

Fuel metering apparatus with a compensated regulating valve in a turbomachine

(84) Etats contractants désignés:
**CZ DE FR GB**

(30) Priorité: **30.10.2002 FR 0213619**

(43) Date de publication de la demande:
**06.05.2004 Bulletin 2004/19**

(73) Titulaire: **HISPANO-SUIZA**
**92700 Colombes (FR)**

(72) Inventeurs:
 • **Hodinot, Laurent**
 **77240 Cesson (FR)**

 • **Leclerc, Henry**
 **91260 Juvisy sur Orge (FR)**
 • **Poitout, Sylvain**
 **94300 Vincennes (FR)**

(74) Mandataire: **Joly, Jean-Jacques et al**
 **Cabinet Beau de Loménie**
 **158, rue de l'Université**
 **75340 Paris Cédex 07 (FR)**

(56) Documents cités:
 **WO-A-99/35385     US-A- 4 493 187**
 **US-A- 4 817 376     US-A1- 2001 022 079**
 **US-B1- 6 328 056**

**EP 1 416 136 B1**

**Description**

Domaine de l'invention

La présente invention se rapporte de façon générale aux systèmes injection de carburant dans les turbomachines et elle concerne plus particulièrement un dispositif de dosage de carburant de grande précision.

Art antérieur

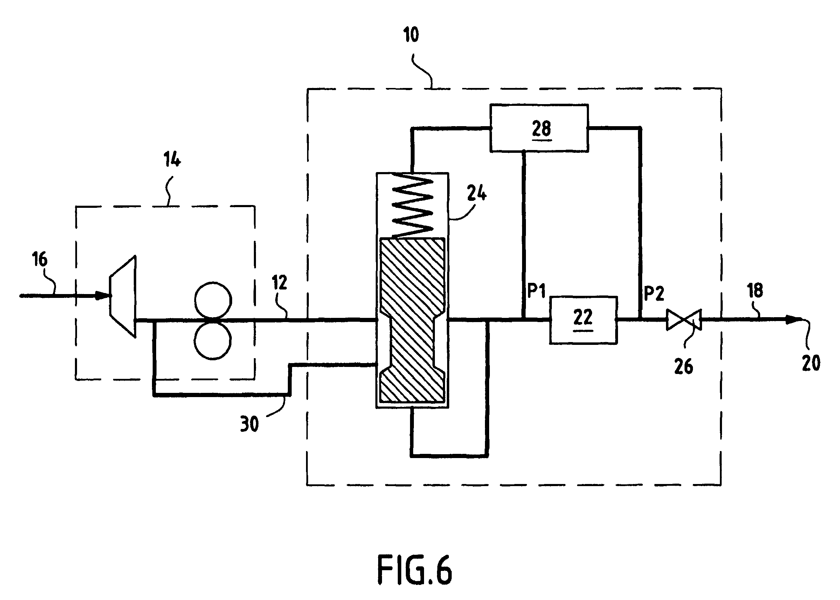

Un système conventionnel d'injection de carburant dans une turbomachine est illustré de façon schématique à la figure 6. Il s'organise autour d'un dispositif de dosage de carburant (fuel metering unit 10) dont le conduit d'entrée 12 est relié à la sortie d'une pompe haute pression 14 qui soutire le carburant d'un réservoir de carburant (flèche 16) et dont le conduit de sortie 18 est relié à une pluralité injecteurs de carburant disposés dans une chambre de combustion de la turbomachine (flèche 20).

Le dispositif de dosage qui contrôle le débit de carburant devant s'écouler dans les injecteurs depuis la pompe haute pression comporte un doseur 22 qui reçoit, à une pression P1, le carburant à injecter d'une soupape de régulation 24 et le délivre, à une pression P2, aux injecteurs au travers d'un clapet d'arrêt 26. On cherche ainsi à maintenir constante la différence de pression P2-P1 aux bornes du doseur par un détecteur de pression différentielle 28 monté à ses bornes et qui agit sur l'ouverture de la soupape de régulation de sorte que lorsque la pression en entrée du doseur augmente (respectivement diminue) par rapport à la pression au niveau de sa sortie, le détecteur actionne la soupape de régulation pour augmenter (diminuant) le débit de carburant retourné à la pompe par un conduit de retour 30, diminuant (augmentant) le débit de carburant transmis au doseur.

Ce dispositif de dosage donne globalement satisfaction. Toutefois, pour des applications aéronautiques, il présente encore une masse importante et un coût élevé et sa fiabilité comme sa précision de dosage peuvent être accrue. Le document WO99 35385 A décrit un dispositif de dosage de carburant comprenant les caractéristiques du préambule de la revendication 1.

Objet et définition de l'invention

Aussi, la présente invention a pour objet un dispositif de dosage de carburant amélioré, c'est à dire ayant une masse et un coût diminués. Un but de invention est aussi d'augmenter la fiabilité du dispositif de dosage ainsi réalisé afin, notamment, d'en diminuer les coûts d'intervention et de maintenance préventive. Un autre but de l'invention est aussi d'augmenter la précision de dosage du carburant par rapport aux dispositifs de l'art antérieur.

Ces buts sont atteints par un dispositif de dosage de carburant dans une turbomachine, monté entre une pompe haute pression qui soutire le carburant d'un réservoir de carburant et une pluralité d'injecteurs de carburant pour injecter ce carburant dans une chambre de combustion de la turbomachine, dispositif comportant un doseur qui reçoit sur une entrée, à une pression P1, le carburant à injecter d'une soupape de régulation et le délivre sur une sortie, à une pression P2, à ladite pluralité d'injecteurs au travers d'un clapet d'arrêt, ladite soupape de régulation comportant un tiroir hydraulique qui peut se déplacer dans une fourrure sous l'action des pressions P1 et P2 prélevées directement aux bornes du doseur et s'exerçant à deux entrées d'extrémité de ladite soupape de régulation, respectivement sur deux sections S1 et S2 du tiroir hydraulique, ledit tiroir comportant une première lumière annulaire pour assurer une re-circulation du carburant vers ladite pompe haute pression en mettant en communication une première entrée d'alimentation de ladite fourrure reliée à une sortie de ladite pompe haute pression avec une sortie d'alimentation de ladite fourrure reliée à une entrée de ladite pompe haute pression, caractérisé en ce que ledit tiroir hydraulique comporte en outre une seconde lumière annulaire pour assurer une autre re-circulation du carburant vers ladite pompe haute pression en mettant en communication une seconde entrée d'alimentation de ladite fourrure reliée à ladite entrée du doseur avec une sortie d'alimentation auxiliaire de ladite fourrure reliée à ladite entrée de la pompe haute pression.

Ainsi, avec cette configuration sans détecteur de pression différentielle, on aboutit à un dispositif de dosage plus compact, moins cher et avec une bonne précision de dosage. En outre, les phénomènes mécaniques et hydrauliques parasites sont compensés.

De préférence, pour assurer un réglage supplémentaire de la loi de dosage, ladite seconde entrée d'alimentation est reliée à ladite entrée du doseur par l'intermédiaire d'un diaphragme fixe. Ce diaphragme fixe peut comporter un orifice percé dans ladite fourrure ou être réalisé à l'extérieur de ladite soupape de régulation.

La sortie auxiliaire d'alimentation est reliée à ladite entrée de la pompe haute pression par l'intermédiaire d'un diaphragme variable qui peut comporter une pluralité d'orifices de formes identiques (de préférence réalisés par électroérosion) répartis de façon équidistante autour de ladite fourrure dans laquelle ils sont percés et décalés les uns des autres dans un sens de déplacement de ladite soupape de régulation. Avantageusement, lesdits orifices comportent une section sélectionnée parmi les sections suivantes : circulaire, rectangulaire, triangulaire ou oblong.

2

L'invention concerne également la soupape de régulation compensée et de grande précision mis en oeuvre dans le dispositif de dosage précité.

Brève description des dessins

Les caractéristiques et avantages de la présente invention ressortiront mieux de la description suivante, faite à titre indicatif et non limitatif, en regard des dessins annexés sur lesquels :

- la figure 1 est une vue schématique d'un système injection de carburant comportant un dispositif de dosage de carburant selon la présente invention,
- les figures 2A et 2B sont respectivement deux vues en perspective et en coupe longitudinale d'une soupape de régulation du dispositif de dosage de carburant de la figure 1,
- les figures 3A à 5B sont des diagrammes montrant différentes formes possibles de diaphragmes ainsi que les lois de compensation correspondantes pour la soupape de régulation de la figure 2A, et
- la figure 6 est une vue schématique d'un système injection de carburant de l'art antérieur.

Description détaillée d'un mode de réalisation préférentiel

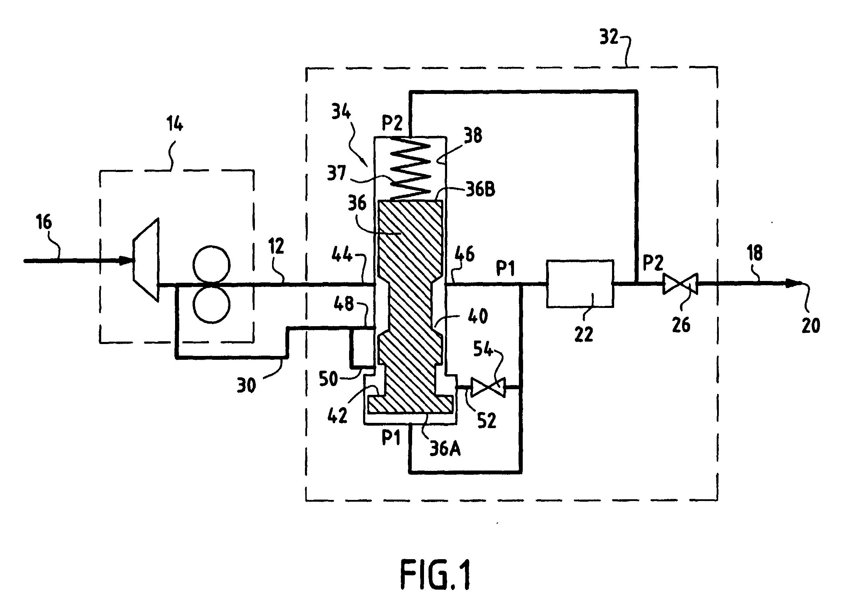

Un système d'injection de carburant d'une turbomachine conforme à l'invention est illustré de façon schématique à la figure 1.

Comme dans la structure de l'art antérieur, on retrouve une pompe de carburant haute pression 14 qui soutire du carburant d'un réservoir de carburant 16 pour l'amener via un dispositif de dosage de carburant 32 à des injecteurs 20 d'une chambre de combustion de la turbomachine.

Toutefois, selon l'invention, le dispositif de dosage ne comporte plus le dispositif de détection de $\Delta P$ mais seulement le doseur 22, la soupape d'arrêt 26 et une soupape de régulation compensée 34 assurant également la régulation de la différence de pression aux bornes du doseur tout en compensant les phénomènes mécaniques et hydrauliques parasites. Ce dispositif de dosage amélioré 32 présente ainsi une masse moindre (allégée du dispositif de détection de $\Delta P$) et donc un coût également moindre, associé à une meilleure précision de dosage.

La soupape de régulation 34 intègre un tiroir hydraulique 36 qui peut se déplacer à l'encontre d'un ressort 37 dans une fourrure 38 sous l'action de forces de pression s'exerçant à ses deux extrémités 36A, 36B, de sections respectives S1 et S2 et, respectivement, issues de l'entrée (pression P1) et de la sortie (pression P2) du doseur 22. Le tiroir hydraulique comporte deux lumières annulaires 40, 42. Une première entrée d'alimentation 44 percée dans la fourrure 38 est reliée au conduit d'entrée 12 et une première sortie d'alimentation 46, également percée dans cette fourrure, est reliée en entrée du doseur 22. Une gorge 45 de la fourrure 38 assure une liaison continue entre l'entrée 44 et la sortie 46 pour l'alimentation du doseur en carburant. La première lumière 40 est destinée à assurer une re-circulation du débit de carburant en excès vers la pompe via une seconde sortie d'alimentation 48 percée dans la fourrure. La seconde lumière 42 assure une communication entre une sortie d'alimentation auxiliaire 50 percée dans la fourrure 38 et reliée au travers d'un diaphragme de gain Kb (variable selon la position de la soupape) au conduit de retour pompe 30 (à la pression Pb) et une seconde entrée d'alimentation 52 percée également dans la fourrure et reliée en entrée du doseur 22 (à la pression P1) au travers d'un diaphragme fixe 54 de gain K1. Ce diaphragme fixe peut, comme illustré, être réalisé à l'extérieur de la soupape de régulation 34 ou bien être percé directement dans la fourrure 38.

Cette configuration particulière du tiroir 36 permet d'exercer, sur la section différentielle S1- S2, une pression modulée (Pm) entre la pression P1 et la pression de retour pompe Pb qui varie en fonction de la position de la soupape. En effet, le $\Delta P$ doseur est déterminé par la force du ressort (F0) selon l'équation suivante : $\Delta P$ * Section tiroir - F0 = 0, et est donc théoriquement constant. Or, la raideur du ressort (R) et les forces réactives agissant sur le tiroir perturbent cet équilibre idéal en faisant évoluer la position de la soupape (Xsoupape) et donc en modifiant le $\Delta P$ doseur. C'est pour vaincre ces phénomènes mécaniques et hydrauliques parasites et compenser cette variation de position de la soupape qu'est introduit la pression Pm qui est dimensionnée de sorte que :

$$(P1 - Pm)(S1- S2) = R*Xsoupape + Fréactives$$

L'équation d'équilibre devient alors :

$$\Delta P * S2 + (P1- Pm)(S1- S2) - F0 - R*Xsoupape - Fréactives = 0$$

La pression modulée s'obtient par un potentiomètre hydraulique composé d'un diaphragme fixe (de gain K1) et alimenté par P1 et d'un diaphragme variable en fonction de la position de soupape (de gain Kb) et alimenté par Pb. En régime stabilisé, Pm est donnée par la relation :

$$Pm = K1^2 * P1 / (K1^2 + Kb^2) + Kb^2 * Pb / (K1^2 + Kb^2)$$

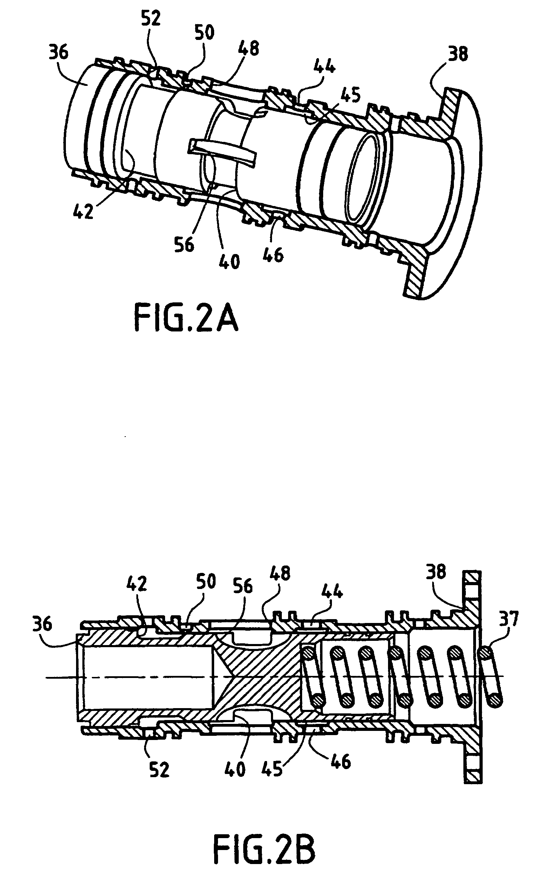

Les figures 2A et 2B montrent un schéma de réalisation en perspective partiellement éclatée et en coupe longitudinale de la soupape de régulation 34. On peut observer le tiroir hydraulique 36 qui peut coulisser dans sa fourrure 38, comportant ses deux lumières annulaires 40, 42, la première lumière 40 étant en outre munie de quatre fentes 56 réparties uniformément autour de ce tiroir et par lesquelles passe d'abord le carburant. On retrouve également les différentes entrées 44, 52 et sorties 46, 48, 50 d'alimentation en carburant, percées dans la fourrure sensiblement en regard des lumières annulaires. Plus particulièrement, la sortie auxiliaire d'alimentation 50 qui fait fonction de diaphragme variable est réalisée par plusieurs orifices de formes identiques répartis de façon équidistante autour de la fourrure dans laquelle ils sont percés et décalés les uns des autres dans le sens de déplacement longitudinal de la soupape. Ces orifices sont avantageusement réalisées par électroérosion ou perçage, les fentes pouvant être obtenues plus classiquement par fraisage.

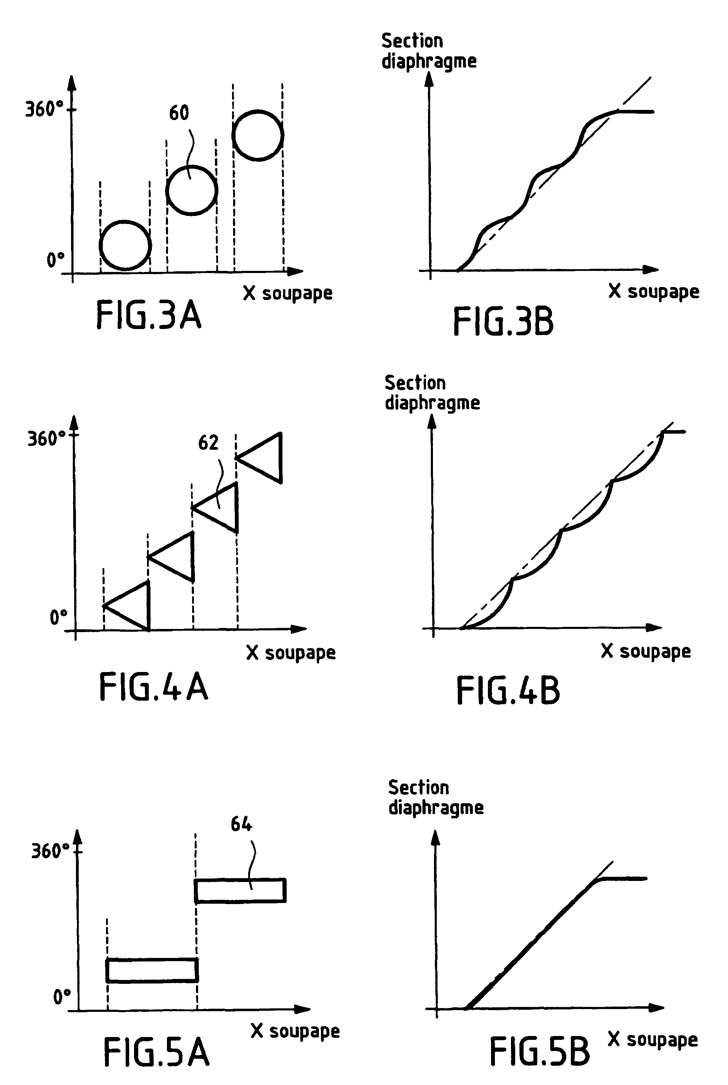

Les figures 3A, 4A, 5A montrent trois exemples de réalisation de ces orifices présentant trois sections de formes différentes et les figures 3B, 4B, 5B illustrent les courbes correspondantes de répartition du débit de carburant au travers du conduit de sortie 50 en fonction de la position de la soupape, les courbes en pointillés matérialisant la loi de compensation optimale des variations de position de la soupape créées par les phénomènes parasites définis précédemment.

Sur la figure 3A, le diaphragme variable Kb comporte trois trous circulaires 60 répartis régulièrement sur les 360° de la périphérie de la fourrure et décalés les uns des autres d'une distance correspondant sensiblement à un demi diamètre. Sur la figure 4A, le diaphragme variable Kb comporte quatre orifices de section triangulaires 62 répartis régulièrement sur les 360° de la périphérie de la fourrure et décalés les uns des autres, le sommet d'un triangle coïncidant avec la base du triangle qui le précède. Sur la figure 5A, le diaphragme variable Kb comporte deux fentes de section rectangulaires 64 réparties régulièrement sur les 360° de la périphérie de la fourrure et décalées l'une de l'autre de la longueur de la fente.

Le fonctionnement normal du système d'injection est le suivant. Classiquement, le déséquilibre des pressions appliquées sur les deux extrémités 36A, 36B en commandant le déplacement d'un tiroir hydraulique 36 de la soupape de régulation 34 entraînera une augmentation ou une diminution du débit de carburant re-circulé. Ainsi, lorsque la pression P1 en entrée du doseur 22 augmente, cette augmentation se répercute sur l'extrémité 36A du tiroir hydraulique engendrant un mouvement vers le haut de ce tiroir et donc une plus grande ouverture de la section de passage correspondant au conduit de retour 30. Le débit re-circulé augmente, et la pression P1 diminue alors maintenant constant le ΔP. De même, lorsque la pression P2 en sortie du doseur 22 augmente, cette augmentation se répercute sur l'extrémité 36B du tiroir hydraulique engendrant un mouvement vers le bas de ce tiroir et donc une moins grande ouverture de la section de passage correspondant au conduit de retour 30. Le débit re-circulé diminue, et la pression P1 augmente alors maintenant ici encore le ΔP constant.

Toutefois, le ΔP obtenu à la suite des mouvements de la soupape n'est pas rigoureusement le même, car il s'y ajoute la raideur du ressort et les forces réactives qui agissent sur l'équilibre du tiroir. Aussi, lorsque la soupape va alternativement s'ouvrir ou se fermer, le ΔP obtenu sera en fait le ΔP initial plus ou moins une imprécision due aux effets parasites précités.

Aussi, avec invention, quant la soupape s'ouvre, Kb augmente et la pression (Pm) qui s'applique sur (S1- S2) va alors diminuer compensant les efforts de dérives qui augmentent et qui tendent à fermer la soupape.

De même, réciproquement, quant la soupape se ferme, Kb diminue et donc Pm augmente, ce qui compense la diminution des effets parasites dus à la fermeture de la soupape.

En définitive, la configuration de l'invention est particulièrement intéressante car on obtient une grande précision dans la loi de dosage avec l'emploi d'un seul diaphragme variable et d'un diaphragme fixe, ce dernier pouvant en outre être positionné aussi bien sur la fourrure de la soupape de régulation qu'à l'extérieure de celle-ci. En outre, l'application d'une pression modulée sur la section différentielle de la soupape de régulation est réalisée très simplement et de façon économique par les orifices dont les formes multiples (on peut envisager également des trous oblongs par exemple) permettent d'obtenir une loi de compensation facilement réglable.

**Revendications**

1. Dispositif de dosage de carburant (32) dans une turbomachine, monté entre une pompe haute pression (14) qui soutire le carburant issu d'un réservoir de carburant (16) et une pluralité d'injecteurs de carburant (20) pour injecter ce carburant dans une chambre de combustion de la turbomachine, dispositif comportant un doseur (22) qui reçoit sur une entrée, à une pression P1, le carburant à injecter d'une soupape de régulation (34) et le délivre sur une sortie, à une pression P2, à ladite pluralité d'injecteurs au travers d'un clapet d'arrêt (26), ladite soupape de régulation comportant un tiroir hydraulique (36) qui peut se déplacer dans une fourrure (38) sous l'action des pressions P1 et P2 prélevées directement aux bornes du doseur et s'exerçant à deux entrées d'extrémité (36A, 36B) de ladite soupape de régulation, respectivement sur deux sections S1 et S2 du tiroir hydraulique, ledit tiroir comportant une première lumière annulaire (40) pour assurer une re-circulation du carburant vers ladite pompe haute pression en mettant en communication une première entrée d'alimentation (44) de ladite fourrure reliée à une sortie de ladite pompe haute pression avec une sortie d'alimentation (48) de ladite fourrure reliée à une entrée de ladite pompe haute pression, **caractérisé en ce que** ledit tiroir hydraulique comporte en outre une seconde lumière annulaire (42) pour assurer une autre re-circulation du carburant vers ladite pompe haute pression en mettant en communication une seconde entrée d'alimentation (52) de ladite fourrure reliée à ladite entrée du doseur avec une sortie d'alimentation auxiliaire (50) de ladite fourrure reliée à ladite entrée de la pompe haute pression.

2. Dispositif de dosage de carburant selon la revendication 1, **caractérisé en ce que** ladite seconde entrée d'alimentation est reliée à ladite entrée du doseur par l'intermédiaire d'un diaphragme fixe (54).

3. Dispositif de dosage de carburant selon la revendication 2, **caractérisé en ce que** ledit diaphragme fixe comporte un orifice soit percé dans ladite fourrure soit réalisé à l'extérieur de ladite soupape de régulation.

4. Dispositif de dosage de carburant selon la revendication 1, **caractérisé en ce que** ladite sortie auxiliaire d'alimentation est reliée à ladite entrée de la pompe haute pression par l'intermédiaire d'un diaphragme variable.

5. Dispositif de dosage de carburant selon la revendication 4, **caractérisé en ce que** ledit diaphragme variable comporte une pluralité d'orifices de formes identiques (60, 62, 64) répartis de façon équidistante autour de ladite fourrure dans laquelle ils sont percés et décalés les uns des autres dans un sens de déplacement de ladite soupape de régulation.

6. Dispositif de dosage de carburant selon la revendication 5, **caractérisé en ce que** lesdits orifices comportent une section sélectionnée parmi les sections suivantes : circulaire, rectangulaire, triangulaire ou oblong.

7. Dispositif de dosage de carburant selon la revendication 6, **caractérisé en ce que** lesdits orifices sont réalisés par électroérosion.

8. Soupape de régulation d'un dispositif de dosage de carburant selon l'une quelconque des revendications 1 à 7.

**Patentansprüche**

1. Kraftstoffdosiervorrichtung (32) in einer Turbomaschine, die zwischen einer Hochdruckpumpe (14), welche den aus einem Kraftstoffbehälter (16) stammenden Kraftstoff entnimmt, und einer Vielzahl von Kraftstoffeinspritzdüsen (20) zum Einspritzen dieses Kraftstoffs in eine Brennkammer der Turbomaschine angeordnet ist, wobei die Vorrichtung umfaßt:

   eine Dosiereinrichtung (22) die bei einem Druck P1 an einem Eingang den einzuspritzenden Kraftstoff von einem Regelungsventil (34) erhält und ihn bei einem Druck P2 an einem Ausgang über ein Sperrventil (26) an die Vielzahl von Einspritzdüsen liefert,

   wobei das Regelungsventil einen Hydraulikschieber (36) umfaßt, der sich unter der Wirkung der Drücke P1 und P2, die direkt an den Anschlüssen der Dosiereinrichtung abgegriffen werden und an zwei endseitigen Eingängen (36A, 36B) des Regelungsventils an zwei Querschnitten S1 bzw. S2 des Hydraulikschiebers spürbar werden, in einer Buchse (38) bewegen kann,
   wobei der genannte Schieber eine erste ringförmige Öffnung (40) umfaßt, um ein Rückzirkulieren des Kraftstoffs zu der genannten Hochdruckpumpe dadurch sicherzustellen, daß ein mit einem Ausgang der Hochdruckpumpe verbundener erster Versorgungseingang (44) der Buchse mit einem mit einem Eingang der Hochdruckpumpe verbundenen Versorgungsausgang (48) der Buchse verbunden wird,
   **dadurch gekennzeichnet,**

**daß** der Hydraulikschieber darüber hinaus eine zweite ringförmige Öffnung (42) aufweist, um ein weiteres Rückzirkulieren des Kraftstoffs zu der genannten Hochdruckpumpe dadurch zu gewährleisten, daß ein mit dem Eingang der Dosiereinrichtung verbundener zweiter Versorgungseingang (52) der Buchse mit einem mit dem Eingang der Hochdruckpumpe verbundenen Hilfsversorgungsausgang (50) der Buchse verbunden wird.

2. Kraftstoffdosiervorrichtung nach Anspruch 1, **dadurch gekennzeichnet, daß** der zweite Versorgungseingang über eine feste Vordrossel (54) mit dem Eingang der Dosiereinrichtung verbunden ist.

3. Kraftstoffdosiervorrichtung nach Anspruch 2, **dadurch gekennzeichnet, daß** die feste Vordrossel eine Öffnung umfaßt, die entweder in die Buchse gebohrt oder außerhalb des Regelungsventils ausgebildet ist.

4. Kraftstoffdosiervorrichtung nach Anspruch 1, **dadurch gekennzeichnet, daß** der Versorgungshilfsausgang über eine variable Vordrossel mit dem Eingang der Hochdruckpumpe verbunden ist.

5. Kraftstoffdosiervorrichtung nach Anspruch 4, **dadurch gekennzeichnet, daß** die genannte variable Vordrossel eine Vielzahl von Öffnungen identischer Form (60, 62, 64) umfaßt, die um die Buchse, in den sie gebohrt sind, äquidistant verteilt und in einer Bewegungsrichtung des Regelungsventils zueinander versetzt sind.

6. Kraftstoffdosiervorrichtung nach Anspruch 5, **dadurch gekennzeichnet, daß** die Öffnungen einen Querschnitt aufweisen, welcher unter den folgenden Querschnitten ausgewählt ist: kreisförmig, rechteckig, dreieckig oder länglich.

7. Kraftstoffdosiervorrichtung nach Anspruch 6, **dadurch gekennzeichnet, daß** die genannten Öffnungen durch Elektroerosion hergestellt werden.

8. Regelungsventil einer Kraftstoffdosiervorrichtung nach irgendeinem der Ansprüche 1 bis 7.

## Claims

1. A fuel metering unit (32) in a turbomachine, the unit being mounted between a high pressure pump (14) which draws fuel from a fuel tank (16) and a plurality of fuel injectors (20) for injecting the fuel into a turbomachine combustion chamber, the unit comprising a meter (22) which has an inlet receiving fuel for injection from a regulator valve (34) at a pressure P1 and has an outlet which delivers the fuel at a pressure P2 to said plurality of injectors via a stop valve (26), said regulator valve comprising a hydraulic slide (36) movable in a sheath (38) under drive from the pressures P1 and P2 taken directly from the terminals of the meter and acting on two end inlets (36A, 36B) of said regulator valve on respective sectional areas S1 and S2 of the hydraulic slide, said slide having a first annular neck (40) for allowing fuel to recirculate to said high pressure pump by putting a first feed inlet (44) of said sheath connected to an outlet of said high pressure pump into communication with a feed outlet (48) of said sheath connected to an inlet of said high pressure pump, the unit being **characterised in that** said hydraulic slide further includes a second annular neck (42) for providing another recirculation path to said high pressure pump by putting a second feed inlet (52) of said sheath connected to said inlet of the meter into communication with an auxiliary feed outlet (50) of said sheath connected to said inlet of the high pressure pump.

2. A fuel metering unit according to claim 1, **characterised in that** said second feed inlet is connected to said inlet of the meter via a fixed diaphragm (54).

3. A fuel metering unit according to claim 2, **characterised in that** said fixed diaphragm has an orifice either pierced through said sheath or else made outside said regulator valve.

4. A fuel metering unit according to claim 1, **characterised in that** said auxiliary feed outlet is connected to said inlet of the high pressure pump via a variable diaphragm.

5. A fuel metering unit according to claim 4, **characterised in that** said variable diaphragm comprises a plurality of orifices of identical shape (60, 62, 64) distributed in equidistant manner around said sheath through which they are pierced and offset from one another in the travel direction of said regulator valve.

6. A fuel metering unit according to claim 5, **characterised in that** said orifices are of a section selected from the following sections: circular, rectangular, triangular, and oblong.

7. A fuel metering unit according to claim 6, **characterised in that** said orifices are made by electroerosion.

8. A regulator valve for a fuel metering unit according to any one of claims 1 to 7.

FIG.1

FIG.2A

FIG.2B

FIG.3A

FIG.3B

FIG.4A

FIG.4B

FIG.5A

FIG.5B

FIG.6

EP 1 416 136 B1